# EUROPEAN PATENT SPECIFICATION

(11) **EP 3 969 515 B1**
(45) Date of publication and mention of the grant of the patent: **21.08.2024**
(21) Application number: 20727887.0
(22) Date of filing: 06.05.2020
(51) Int. Cl.: C08L 33/08, C09D 133/12

(54) **COMPOSITE ARTICLE INCLUDING A DAMPENING LAYER**
VERBUNDARTIKEL MIT EINER DÄMPFUNGSSCHICHT
ARTICLE COMPOSITE COMPRENANT UNE COUCHE D'AMORTISSEMENT

(30) Priority: 15.05.2019 US 201962848206 P
(43) Date of publication of application: 23.03.2022
(73) Proprietor: ND Industries, Inc., Clawson, MI 48017 (US)
(72) Inventor: CIACIUCH, Cavin Wayne, Warren, Michigan 48088 (US); FOUKES, Richard John, Shelby Township, Michigan 48315 (US)
(74) Representative: Maiwald GmbH
(86) International application number: PCT/US2020/031573
(87) International publication number: WO 2020/231687

(56) References cited:
- EP-A1- 1 035 147
- US-A1- 2008 264 559

## Description

### FIELD OF THE INVENTION

The present disclosure generally relates to a composite article including a dampening layer that can be disposed on threaded surfaces, such as threaded surfaces of fasteners. The present disclosure also relates to methods of forming the composite article, methods of disposing a dampening layer on fasteners, methods of joining fasteners and elements together, and use of the composite article.

### DESCRIPTION OF THE RELATED ART

In many applications, fasteners provide an efficient mechanism for mechanically joining two parts together. Some fasteners can be of the self-locking type. Self-locking functionality may be achieved by applying a locking coating to at least a portion of a threaded surface of the fastener.

Conventional locking coatings are typically applied to the fastener as a liquid. These locking coatings may be thermoset or thermoplastic. Thermoset locking coatings are reactive upon installation of the fastener. That is, the thermoset locking coatings, after installation, cannot be reused if reinstallation of the fastener is desired after uninstallation (or adjustment) because the coating will fracture after curing and movement or removal of the fastener. Further, thermoset locking coatings cure to hard or rigid thermoset plastic which can crack under vibration, be difficult to remove from the fastener, and damage plastics.

On the other hand, thermoplastic locking coatings increase friction of the fastener such that loosening-resistance of the fastener is improved. Thermoplastic locking coatings, after installation, can be reused if reinstallation of the fastener is desired after uninstallation. However, both thermoset and thermoplastic conventional locking coatings require special application conditions and careful handling to apply the coating, and significant curing or drying time to effectively install the fastener due to their liquid states.

US 20080264559 A1 describes a composition for a removable top coating for protecting the exposed face of a temporary removable graphic. A remover for the transferred graphic image is provided that completely dissolves the temporary removable graphic but does not affect the commonly encountered substrates such as concrete, brick, wooden floors, asphalt surfaces, terrazzo and motor vehicle body surfaces, marine and aeronautical craft surfaces.

There remains an opportunity for improvement to provide a self-locking functionality exhibiting improved loosening-resistance for a fastener that can be robustly handled, requires minimal or no dry time before installation of the fastener, and can be reused if reinstallation and/or adjustment of the fastener is desired.

### BRIEF SUMMARY OF THE INVENTION

The present invention is defined in and by the appended claims, and relates to a composite article. The composite article includes a backing layer and a dampening layer disposed on the backing layer. The composite article is prepared from a composition including a first acrylic resin and a second acrylic resin different from the first acrylic resin.

### BRIEF DESCRIPTION OF THE DRAWINGS

FIG. 1 is a chart illustrating improved loosening-resistance of a non-limiting embodiment of a fastener including a dampening layer of a composite article; and
FIG. 2 is another chart illustrating improved loosening-resistance of a non-limiting embodiment of a fastener including a dampening layer of a composite article.

### DETAILED DESCRIPTION

A composite article, a method of forming the composite article, a method of disposing a dampening layer on a fastener, a method of j oining a fastener and an element together, and a use of the composite article, are disclosed herein. The composite article is described immediately below, followed by a description of the method of forming the composite article, the method of using the composite article, a method of disposing a dampening layer on a fastener, and a method of joining a fastener and an element together. However, the composite article of the present invention is not limited to a particular method of forming or use.

### Composite Article

The composite article includes, a backing layer and a dampening layer. The dampening layer may be formed, transported, stored, and handled on the backing layer. A user of the composite article may dispose the dampening layer on a fastener, as will be described in further detail below. The dampening layer, which may be in a semi-solid or solid form, generally a solid form, can be applied to the fastener thereby allowing the fastener to be utilized immediately.

In certain embodiments, the dampening layer is adapted to provide the fastener with improved loosening-resistance as compared to a fastener free of the dampening layer, including in the presence of vibration. Further, in various embodiments, the dampening layer is thermoplastic thereby continuing to provide improved loosening-resistance even after unfastening and refastening and/or mere adjustment of the fastener, including in the presence of vibration. Without being bound by theory, it is believed that the dampening layer improves loosening-resistance of the fastener by increasing friction of the fastener, as will be described in further detail below. The composite article may be utilized to secure and/or prevent loosening of the fastener, as contemplated herein.

The dampening layer is disposed on the backing layer. It is to be appreciated that the term "disposed on," is not to be construed as limiting the composite article in any way, such as by limiting the composite article to a particular configuration or method of forming. Furthermore, the dampening layer may be disposed on any portion(s) of the backing layer, as will be understood by those of skill in the art. For example, the dampening layer may be disposed on one face or side of the backing layer. Furthermore, for example, the dampening layer may be disposed on only a portion of the one face or side of the backing layer. In certain embodiments, the backing and dampening layers are in direct contact. In other words, there is not an intervening layer between the backing and dampening layers. In other embodiments, the composite article includes a release layer disposed between the backing and dampening layers. In various embodiments, the composite article comprises a silicone release layer or the like to facilitate removal of the dampening layer from the backing layer. It is to be appreciated that the composite article may include additional layers beyond the backing layer, the release layer, and the dampening layer. An example of an additional layer includes, but is not limited to, a cover layer disposed on the dampening layer and spaced from the backing layer.

### Dampening Layer

The dampening layer is present on the backing layer and may be in a solid or semi-solid form. In various embodiments, the dampening layer is in a solid form. The dampening layer may be thermoplastic, as introduced above, such that the dampening layer may be substantially free or completely of a curing agent. The phrase "substantially free" as utilized herein means that the dampening layer includes less than 1, less than 0.1, or less than 0.01, part(s) by weight, based on 100 parts by weight of the dampening layer.

As will be described in further detail below, the solid or semi-solid dampening layer may be of any shape and dimension, which are each typically selected based on the particular element to be utilized and/or the intended use of the composite article. The dampening layer may have an average thickness of from about 1 to about 10, optionally from about 2 to about 8, or optionally from about 3 to about 5, mil(s). In certain embodiments, the dampening layer emulates TEFLON/PTFE tape. It should be appreciated however, that unlike common PTFE tape, the dampening layer of this disclosure prevents loosening, e.g. of mated threaded parts, fasteners, etc.

The dampening layer on the backing layer is generally considered to be "dry," i.e., it is dry to the touch such that physical transfer from the backing layer is little to none. That being said, the dampening layer on the backing layer may still have a moisture (or water) content, which may fluctuate based on the components thereof and ambient conditions (e.g. temperature and relative humidity). In various embodiments, the dampening layer has a moisture content of less than about 20, less than about 15, less than about 10, less than about 5, less than about 1, or approaching 0, parts by weight, based on 100 parts by weight of the dampening layer. Too much moisture may allow the dampening layer to slough off the backing layer, whereas too little moisture, e.g. no moisture, may make the dampening layer brittle and prone to flaking off the backing layer. Further, the dampening layer may have a solids content in an amount of from greater than 80, greater than 85, greater than 90, greater than 95, greater than 99, or approaching 100, parts by weight, based on 100 parts by weight of the dampening layer.

The dampening layer is prepared from a composition including a first acrylic resin and a second acrylic resin different from the first acrylic resin. It is to be appreciated that the composition may include other resins in addition to the first acrylic resin and the second acrylic resin. In certain embodiments, the first acrylic resin and the second acrylic resin are thermoplastic. However, it is to be appreciated that one or both of the first acrylic resin and the second acrylic resin may be thermoset. It is believed that the combination of acrylic resins provides the dampening layer with improved properties, such as improved vibration dampening properties. In this way, a fastener including the dampening layer can hold up and stay tight under heavy vibrational forces.

The first acrylic resin may be prepared from a reaction mixture including, but not limited to, (meth)acrylate monomers such as methyl methacrylate (MMA), ethyl acrylate (EA), butyl acrylate (BA), butyl methacrylate (BMA), n-butyl methacrylate (n-BMA), isobutylmethacrylate (IBMA), polyethylmethacrylate (PEMA), or combinations thereof. Exemplary acrylic resins include those commercially available from Rohm and Haas, Co., of Philadelphia, PA under the trade designation "Paraloid" and from Ineos Acrylics, of Cordova, TN under the trade designation "Elvacite" resins. Other suitable acrylic resins include those from S.C. Johnson, of Racine, WI under the trade designation "Joncryl" acrylics.

It is to be appreciated that the reaction mixture for preparing the first acrylic resin may include other olefinically unsaturated monomers including monomers which may contain, apart from an olefinic double bond, further functional groups or may contain, apart from an olefinic double bond, no further functional groups. Non-limiting examples of other suitable olefinically unsaturated monomers include other olefinically unsaturated monomers, such as alkyl (meth)acrylates, cycloaliphatic (meth)acrylates and aromatic (meth)acrylates. Typical alkyl (meth)acrylates have from 1 to 18 carbons in the alkyl group such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, pentyl (meth)acrylate, hexyl(meth) acrylate, 2-ethyl hexyl (meth)acrylate, nonyl (meth)acrylate, decyl (meth)acrylate, lauryl (meth)acrylate, and the like. Cycloaliphatic (meth)acrylates can be used such as cyclohexylacrylate, trimethylcyclohexyl (meth)acrylate, t-butyl cyclohexyl (meth)acrylate, and the like. Aromatic (meth)acrylates such as benzyl (meth)acrylate, phenyl (meth)acrylate, and phenoxy ethyl (meth)acrylic can also be used.

Non-limiting examples of suitable acid functional olefinically unsaturated monomers include olefinically unsaturated carboxylic acids, phosphonic acids, phosphoric acids, and sulfonic acids. Non-limiting examples of suitable olefinically unsaturated carboxylic acids are acrylic acid, methacrylic acid, crotonic acid and isocrotonic acid. Non-limiting examples of suitable olefinically unsaturated phosphoric, phosphonic and sulfonic acids are styrene sulfonic acid, acrylamido methyl propane sulfonic acid, methacryloxyethyl phosphate vinyl phosphonic acid and the like. In certain embodiments, the acid functional olefinically unsaturated monomer includes acrylic acid, methacrylic acid, or a combination thereof.

Non-limiting examples of suitable hydroxy functional olefinically unsaturated monomers include hydroxyalkyl esters of alpha, beta-olefinically unsaturated monocarboxylic acids having primary or secondary hydroxyl groups. Further non-limiting examples include the hydroxyalkyl esters of acrylic acid, methacrylic acid, crotonic acid and/or itaconic acid. The hydroxyalkyl radicals may contain, for example, 1 to 10 carbon atoms or optionally 2 to 6 carbon atoms. Non-limiting examples of suitable hydroxyalkyl esters of alpha, beta-olefinically unsaturated monocarboxylic acids having primary hydroxyl groups are 2-hydroxyethyl(meth)acrylate, 3 -hydroxypropyl(meth)acrylate, 4-hydroxybutyl(meth)acrylate, 5-hydroxyamyl(meth)acrylate, 6-hydroxyhexyl(meth)acrylate, or combinations thereof. Non-limiting examples of suitable hydroxyalkyl esters having secondary hydroxyl groups include 2-hydroxypropyl(meth)acrylate, 2-hydroxybutyl(meth)acrylate, 3-hydroxybutyl(meth)acrylate, or combinations thereof. Further hydroxy functional olefinically unsaturated monomers which may be used are reaction products of alpha, beta-unsaturated monocarboxylic acids with glycidyl esters of saturated monocarboxylic acids branched in the alpha position, e.g., with glycidyl esters of saturated alpha-alkylalkane monocarboxylic acids or alpha, alpha'-dialkylalkane monocarboxylic acids. In certain embodiments, these are the reaction products of (meth)acrylic acid with glycidyl esters of saturated alpha, alpha'-dialkylalkane monocarboxylic acids having from 7 to 13 carbon atoms in the molecule or optionally from 9 to 11 carbon atoms in the molecule. Other hydroxy-functional unsaturated monomers are polyethylene oxide and/or polypropylene oxide modified (meth)acrylates.

Other polymerizable monomers can also be used for preparing the first acrylic resin, such as styrene, a-methyl styrene, vinyl acetate, vinyl butyrate, vinyl pyrrolidone, and the like. Combinations of two or more different monomers can be used.

In certain embodiments, the first acrylic resin includes, consists essentially of, or consists of, a polymer of n-butyl methacrylate. The first acrylic resin may be formed from a reaction mixture including n-butyl methacrylate. The n-butyl methacrylate may be present in the reaction mixture in an amount of from about 1 to 100 part(s) by weight based on 100 parts by weight of the reaction mixture. It is to be appreciated that the reaction mixture may include other olefinically unsaturated monomers, such as any of the monomers described above.

In various embodiments, the first acrylic resin includes, consists essentially of, or consists of, a copolymer of methyl methacrylate and n-butyl methacrylate. The first acrylic resin may be formed from a reaction mixture including methyl methacrylate and n-butyl methacrylate. The methyl methacrylate may be present in the reaction mixture in an amount of from about 1 to 99 part(s) by weight based on 100 parts by weight of the reaction mixture. The n-butyl methacrylate may be present in the reaction mixture in an amount of from about 1 to 99 part(s) by weight based on 100 parts by weight of the reaction mixture. It is to be appreciated that the reaction mixture may include other olefinically unsaturated monomers, such as any of the monomers described above. It is also to be appreciated that any other thermoplastic acrylate copolymers/polymers with similar T_{g} may be included as the first acrylic resin.

The first acrylic resin may have a T_{g} of from about -20 to about 60, optionally from about -10 to about 50, or optionally from about 0 to about 40, °C, in accordance with ASTM D7028. The first acrylic resin may have a T_{g} of greater than -20, optionally greater than -10, or optionally greater than 0, °C, in accordance with ASTM D7028. The first acrylic resin may have a T_{g} of less than 60, optionally less than 50, or optionally less than 40, °C, in accordance with ASTM D7028.

The first acrylic resin may have a weight average molecular weight of from about 50,000 to about 300,000, optionally from about 90,000 to about 200,000, or optionally from about 120,000 to about 160,000, based on gel permeation chromatography. The first acrylic resin may have a weight average molecular weight of greater than 50,000, optionally greater than 90,000, or optionally greater than 120,000, based on gel permeation chromatography. The first acrylic resin may have a weight average molecular weight of less than 300,000, optionally less than 200,000, or optionally less than 160,000, based on gel permeation chromatography. The determination of weight average molecular weight based on gel permeation chromatography is in accordance with a method similar to the method described in ASTM D 5296-05.

The first acrylic resin is present in the composition in an amount of from about 30 to about 50, optionally from about 30 to about 45, optionally from about 33 to about 42, or optionally from about 35 to about 40, parts by weight, based on 100 parts by weight of the composition. Additional subranges of the preceding endpoints, and other points in-between, are also contemplated.

The second acrylic resin comprising a polymer of methyl methacrylate may be prepared from a reaction mixture including, but not limited to, other (meth)acrylate monomers such as methyl methacrylate (MMA), ethyl acrylate (EA), butyl acrylate (BA), butyl methacrylate (BMA), n-butyl methacrylate (n-BMA) isobutylmethacrylate (IBMA), polyethylmethacrylate (PEMA), or combinations thereof. Exemplary acrylic resins include those commercially available from Rohm and Haas, Co., of Philadelphia, PA under the trade designation "Paraloid" and from Ineos Acrylics, of Cordova, TN under the trade designation "Elvacite" resins. Other suitable acrylic resins include those from S.C. Johnson, of Racine, WI under the trade designation "Joncryl" acrylics.

It is to be appreciated that the reaction mixture for preparing the second acrylic resin may include other olefinically unsaturated monomers including any of the monomers described above with regard to the first acrylic resin.

In certain embodiments, the second acrylic resin includes, consists essentially of, or consists of, a polymer of methyl methacrylate. The second acrylic resin may be formed from a reaction mixture including methyl methacrylate. The methyl methacrylate may be present in the reaction mixture in an amount of from about 1 to 100 part(s) by weight based on 100 parts by weight of the reaction mixture. It is to be appreciated that the reaction mixture may include other olefinically unsaturated monomers, such as any of the monomers described above for the first acrylic resin so long as the second acrylic resin is different from the first acrylic resin.

In various embodiments, the second acrylic resin includes, consists essentially of, or consists of, a copolymer of methyl methacrylate and butyl acrylate. The second acrylic resin may be formed from a reaction mixture including methyl methacrylate and butyl acrylate. The methyl methacrylate may be present in the reaction mixture in an amount of from about 1 to about 99, optionally from about 50 to about 99, or optionally from about 70 to about 80, part(s) by weight, based on 100 parts by weight of the reaction mixture. The butyl acrylate may be present in the reaction mixture in an amount of from about 1 to about 99, optionally from about 1 to about 50, or optionally from about 20 to about 30, part(s) by weight, based on 100 parts by weight of the reaction mixture. It is to be appreciated that the reaction mixture may include other olefinically unsaturated monomers, such as any of the monomers described above for the first acrylic resin so long as the second acrylic resin is different from the first acrylic resin. It is also to be appreciated that any other thermoplastic acrylate copolymers/polymers with similar T_{g} may be included as the second acrylic resin.

The second acrylic resin may have a T_{g} of from about 10 to about 90, optionally from about 20 to about 80, or optionally from about 30 to about 70, °C, in accordance with ASTM D7028. The second acrylic resin may have a T_{g} of greater than 10, optionally greater than 20, or optionally greater than 30, °C, in accordance with ASTM D7028. The second acrylic resin may have a T_{g} of less than 90, optionally less than 80, or optionally less than 70, °C, in accordance with ASTM D7028.

The second acrylic resin may have a weight average molecular weight of from about 50,000 to about 300,000, optionally from about 120,000 to about 250,000, or optionally from about 160,000 to about 200,000, based on gel permeation chromatography. The second acrylic resin may have a weight average molecular weight of greater than 50,000, optionally greater than 120,000, or optionally greater than 160,000, based on gel permeation chromatography. The second acrylic resin may have a weight average molecular weight of less than 300,000, optionally less than 250,000, or optionally less than 200,000, based on gel permeation chromatography. The determination of weight average molecular weight based on gel permeation chromatography is in accordance with a method similar to the method described in ASTM D 5296-05.

The second acrylic resin is present in the composition in an amount of from about 1 to about 10, optionally from about 2 to about 8, or optionally from about 3 to about 7, parts by weight, based on 100 parts by weight of the composition. Additional subranges of the preceding endpoints, and other points in-between, are also contemplated.

The composition further includes a variety of additives, including, a solvent component, a plasticizer component, a surfactant component, a filler component, and may further include a colorant component.

The solvent component may include an organic solvent. However, it is to be appreciated that the solvent component may include any other solvent, including water, known for solvating solutes so long as the solvent is compatible with the components of the composition.

Examples of suitable organic solvents for the solvent component include, but are not limited to, toluene, xylene, butyl acetate, acetone, methyl isobutyl ketone, methyl ethyl ketone, ethyl amyl ketone, methanol, isopropanol, butanol, hexane, acetone, ethylene glycol, monoethyl ether, propylene glycol methyl ether, VM and P naptha, mineral spirits, heptane and other aliphatic, cycloaliphatic, aromatic hydrocarbons, aromatic petroleum distillates, esters, ethers and ketone, or combinations thereof. In certain embodiments, the solvent component includes methyl ethyl ketone (MEK), methyl isobutyl ketone (MIBK), toluene, propylene glycol methyl ether, or combinations thereof.

The solvent component may include a first solvent, a second solvent, and a third solvent. The first solvent may be any solvent, such as any fast drying polar solvent (e.g. MIBK or acetone). The second solvent may be any solvent, such as any aliphatic solvent (e.g. hexane, heptane, or xylene). The third solvent may be any solvent, such as any slow evaporating multipolar solvent or tail solvent for film formation (e.g. a glycol ether solvent).

The solvent component may be present in the composition in various amounts. In certain embodiments, the solvent component is present in the composition in an amount of from about 40 to about 60, optionally from about 45 to about 55, or optionally from about 47 to about 53, parts by weight, based on 100 parts by weight of the composition. The first solvent may be present in the composition in various amounts. In certain embodiments, the first solvent is present in the composition in an amount of from about 10 to about 60, optionally from about 15 to about 50, or optionally from about 25 to about 41, parts by weight, based on 100 parts by weight of the composition. The second solvent may be present in the composition in various amounts. In certain embodiments, the second solvent is present in the composition in an amount of from about 1 to about 15, optionally from about 3 to about 13, or optionally from about 6 to about 11, parts by weight, based on 100 parts by weight of the composition. The third solvent may be present in the composition in various amounts. In certain embodiments, the third solvent is present in the composition in an amount of from about 1 to about 15, optionally from about 3 to about 13, or optionally from about 6 to about 11, parts by weight, based on 100 parts by weight of the composition. Additional subranges of the preceding endpoints, and other points in-between, are also contemplated. It is to be appreciated that the solvent component is an aggregate of all solvents present in the composition, including solvents that are individually or solvents associated with other components.

The plasticizer component may include a plasticizer that may be used to modify various characteristics including, but not limited to, coating hardness, adding hydrophobicity, and/or lowering breakaway torque, and the like. The plasticizer includes, but is not limited to, phthalates, trimellitates, benzoates, adipates, sebacates, maleates, citrates, epoxidized vegetable oils, sulfonamides, organophosphates, glycols/polyethers, polymeric plasticizers and polybutenes, or combinations thereof. However, it is to be appreciated that the plasticizer component may include any other plasticizer understood in the art so long as the plasticizer is compatible with the components of the composition.

The plasticizer may be an ester plasticizer. Examples of suitable ester plasticizers include, but are not limited to, dioctyl phthalate (DOP), n-hexyl-n-decyl phthalate (NHDP), n-octyl-decyl phthalate (NODP), di(isononyl) phthalate (DINP), di(isodecyl)phthalate (DIDP), diundecyl phthalate (DUP), di(isotridecyl)phthalate (DTDP), di-2-ethylhexyl adipate (DOA), di-n-octyl-n-decyl adipate (DNODA), diisononyl adipate (DINA), di-2-ethylhexyl azelate (DOZ), di-2-ethylhexyl sebacate (DOS), trioctyl trimellitate (TOTM), trioctyl phosphate (TOP), tricresyl phosphate (TCP), aliphatic polyester plasticizer, aliphatic polyol plasticizer, or combinations thereof. In certain embodiments, the plasticizer component includes trioctyl trimellitate (TOTM). It is to be appreciated the plasticizer may include any phthalate known in the art so long as it is compatible with the composition.

The plasticizer component may be present in the composition in various amounts. In certain embodiments, the plasticizer component is present in an amount of from about 1 to about 15, optionally from about 3 to about 15, optionally from about 5 to about 12, or optionally from about 6 to about 10, parts by weight, based on 100 parts by weight of the composition. Additional subranges of the preceding endpoints, and other points in-between, are also contemplated.

The surfactant component may include anionic surfactants, non-ionic surfactants, cationic surfactants, Zwitterionic surfactants, or combinations thereof. However, it is to be appreciated that the surfactant component may include any other surfactant understood in the art so long as the surfactant is compatible with the components of the composition.

Examples of suitable anionic surfactants include, but are not limited to, fatty alcohol sulphates, alkylphenol sulphates, fatty alcohol ether sulphates, fatty alcohol ether sulphates, alkylphenol ether sulphates, alkylbenzene sulphonic acid, alkyl ether carboxylic acid and salts thereof, alkyl sulphosuccinates, alkyl sulphosuccinamates, phosphate esters, α-olefin sulphonates, or combinations thereof. Examples of suitable non-ionic surfactants include, but are not limited to, alcohol ethoxylates, alkylphenol ethoxylates, polyethylene oxide/polyethylene oxide block copolymers, polyvinyl alcohol, polyvinyl pyrroliddone, sorbitan fatty acid esters, sorbitan ester ethoxylates, or combinations thereof. Examples of suitable cationic surfactants includes, but are not limited to, alkyl dimethylamines, quaternary ammonium compounds, or combinations thereof. In certain embodiments, the surfactant component includes a nonionic surfactant. The nonionic surfactant may include an acetylene glycol surfactant, 2-ethylhexanol, or a combination thereof.

The surfactant component may be present in the composition in various amounts. In certain embodiments, the surfactant component is present in the composition in an amount of from about 0.05 to about 1 part(s) by weight, based on 100 parts by weight of the composition. Additional subranges of the preceding endpoints, and other points in-between, are also contemplated.

The colorant component, when present, may include a colorant including, but not limited to, one or more pigments, dyes, or combinations thereof to achieve a coating color. Composition colors are sometimes used to indicate the function of the composition or the resulting dampening layer. Suitable colorants will generally be those that are soluble or dispersible in the solvent component of the composition and be compatible with the chemistry of the composition.

The colorant component may be present in the composition in various amounts. In certain embodiments, the colorant component is present in the composition in an amount of from about 0.05 to about 1 part(s) by weight based on 100 parts by weight of the composition. Additional subranges of the preceding endpoints, and other points in-between, are also contemplated.

The filler component may include a filler that may be used for various objectives including, but not limited to, cost control, rheology control, lubricity modification, as well as to prevent seizing or galling. Fillers may also be used to assist with the rupture of microcapsules. The filler component may include an inorganic filler. Examples of suitable inorganic fillers include, but are not limited to, powdered nickel, copper, zinc, and aluminum. Suitable mineral fillers include, but are not limited to, talc, calcium carbonate, silicates such as mica, wollastonite, titanium dioxide, quarts, fumed silica precipitated silica, graphite, boron nitride, or combinations thereof. In certain embodiments, the filler component includes fumed silica.

The filler component may be present in the composition in various amounts. In certain embodiments, the filler component is present in the composition in an amount of from about 0.01 to about 1 part(s) by weight based on 100 parts by weight of the composition. Additional subranges of the preceding endpoints, and other points in-between, are also contemplated.

Other components that may be present in the composition include minor amounts of antioxidants, inhibitors, defoamers, dispersing aids, heat stabilizers, UV stabilizers, and the like, such as one or more components described in U.S. Patent App. Pub. No. 2004/0258922 A1 to Willett et al. (hereinafter "Willett"), in U.S. Patent No. 9,404,015 B2 to Hable et al. (hereinafter "Hable"), and/or U.S. Patent No. 10,214,668 B2 to Snyder et al. (hereinafter "Snyder"), the disclosures of which are incorporated herein by reference. In various embodiments, one or more of such components are individually present in the composition in an amount less than about 5 parts by weight based on 100 parts by weight of the composition.

### Backing Layer

The backing layer can be in a variety of forms including, e.g., polymer films, paper, cardboard, stock card, woven and nonwoven webs, fiber reinforced films, foams, composite film-foams, or combinations thereof. The backing layer can include a variety of materials including, e.g., fibers, lignocellulose, wood, foam, and thermoplastic polymers including, e.g., polyolefins (e.g., polyethylene including, e.g., high density polyethylene, low density polyethylene, linear low density polyethylene, and linear ultra-low density polyethylene), polypropylene, and polybutylenes; vinyl copolymers (e.g., polyvinyl chlorides, plasticized and un-plasticized polyvinyl chlorides, and polyvinyl acetates); olefinic copolymers including, e.g., ethylene/methacrylate copolymers, ethylene/vinyl acetate copolymers, acrylonitrile-butadienestyrene copolymers, and ethylene/propylene copolymers; acrylic polymers and copolymers; polyurethanes; and combinations thereof. Suitable blends also include, e.g., blends of thermoplastic polymers, elastomeric polymers and combinations thereof including, e.g., polypropylene/polyethylene, polyurethane/polyolefin, polyurethane/polycarbonate, and polyurethane/polyester.

Useful polymer films include, e.g., a single-layer films, multi-layer films, porous and nonporous films, and combinations thereof. The polymer film can also be a filled material such as filled film (e.g., calcium carbonate filled polyolefin). The polymer film can be a continuous layer or a discontinuous layer. If utilized, multi-layer polymer films are generally integrally bonded to one another in the form of a composite film, a laminate film and combinations thereof. The polymer films can be made integral to one another using any suitable method including, e.g., co-molding, coextruding, extrusion coating, joining through an adhesive, joining under pressure, joining under heat, and combinations thereof.

In certain embodiments, the backing layer includes a lignocellulosic material, a polymeric film, or a combination thereof. In various embodiments, the backing layer includes a polymeric material, such as a polyolefin (e.g. polypropylene, polyethylene, etc.).

In embodiments including a polymeric film, the backing layer may have an average thickness of from about 0.1 to about 20 mils, optionally from about 3 to about 12 mils, or optionally from about 4 to about 5 mils. In embodiments including a lignocellulosic material, the backing layer has a thickness weight of from about 20 to 100 pounds, from about 40 to about 80 pounds, or from about 57 to about 72 pounds. The backing layer may have a width of from about 0.1 to about 5 inches, optionally from about 0.2 to about 3 inches, optionally from about 0.25 to about 2 inches, optionally from about 0.3 to about 1.5 inches, or optionally about 0.375 to about 1, inch(es). The backing layer may be of any length, such as on a spool. If the adhesive is intended to be provided as a strip, the backing may have a length of from about 0.1 to about 10 inches, optionally from about 0.5 to about 5 inches, or optionally from about 1 to about 2 inch(es). In various embodiments, the dampening layer will have a width and/or length that is complimentary to the width and/or length of the backing layer. As such, the dampening layer can have the widths and lengths as described above for the backing layer.

As introduced above, a release layer may be disposed on the backing layer. The release layer may be the silicone release layer prepared from a silicone-containing composition. The silicone-containing composition may be applied to the backing layer to form the silicone release layer thereon. However, it is to be appreciated that any release layer, or composition therefrom, known in the art to promote release of a layer, may be utilized in the composite article. Non-limiting examples of suitable release layers may be formed from compositions including silicone, silicone copolymers including, e.g., silicone acrylates, silicone polyurethanes and silicone polyureas, fluorochemicals, fluorocarbons, fluorosilicones, perfluoropolyethers, urethanes, acrylates, polyolefins (e.g., polyethylene, polypropylene, and low density polyethylene), and other low surface energy-based release compositions, or combinations thereof.

### Fastener

The dampening layer can be disposed on the fastener by any suitable mechanism, including by machine or by hand, as understood in the art. The fastener may include a threaded surface. The fastener may further include the dampening layer at least partially disposed on the threaded surface. By "at least partially disposed," it is generally meant that the dampening layer is disposed on a portion, a majority, or an entirety, of the threaded surface of the fastener. Typically, the dampening layer is disposed about the threaded surface of the fastener to coat the threaded surface thereof, although partial coating of the threaded surface may be carried out, e.g. circumferentially and/or lengthwise. The dampening layer may also be present on non-threaded portions of the fastener, e.g. on an adjacent smooth surface (or surfaces). Application of the dampening layer can emulate application of TEFLON/PTFE tape, e.g. by pulling and wrapping the dampening layer abound the threaded surface. In general, the dampening layer has some amount of elasticity allowing it to stretch and be pulled around a fastener, thereby ensuring intimate engagement with a surface thereof, e.g. threads.

The fastener is not limited to any particular type of fastener. Typically, the fastener is a conventional fastener understood in the art. Suitable fasteners include, but are not limited to, bolts, nuts, screws, studs, stand-offs, and combinations thereof. With bolts, screws, studs, and stand-offs, the fastener will generally have an elongated body which includes the threaded surface, and optionally, an adjacent smooth surface (or surfaces). The fastener may be of various types, drive types, head styles, diameters, and lengths. Combinations of different coated (or uncoated) fasteners may be utilized for a given end application, e.g. bolts and nuts, bolts and studs, bolts and screws, etc., or the coated fastener may be utilized alone, e.g. a coated bolt, a coated nut, etc.

The threaded surface may be external (i.e., male) or internal (i.e., female), and can be of various types, configurations, or patterns. As such, the threaded surface is not limited to, for example, a particular major diameter, minor diameter, pitch diameter, helix angle, thread angle, thread count, thread pitch, or number of crests/roots.

Average thickness of the dampening layer on the coated fastener may be uniform or may vary. Typically, the dampening layer fills at least a portion, a majority, or an entirety of the threaded surface roots. The dampening layer may also cover at least a portion, a majority, or an entirety of the threaded surface crests. The total amount of dampening layer disposed on the fastener is not limited and can be readily determined via routine experimentation for a given end application or need.

The fastener may be formed from conventional materials including, but not limited to, carbon steel, alloy steel, stainless steel ("SS"), plain steel ("PS"), iron, brass, bronze, titanium, aluminum, magnesium alloy, and combinations thereof. Typically, the fastener is formed from a metal or metal alloy to provide strength and rigidity. In other embodiments, the fastener is formed from a plastic.

The fastener may include various types of conventional plating and/or coating materials, including, but not limited to, zinc plating (e.g. galvanization, zinc flakes, etc.), chromium (or chrome) plating, nickel plating, cadmium plating, aluminum plating, magnesium coating, phosphate (e.g. dry phosphate) coating, and combinations thereof. Alternatively, the fastener may be a "virgin" or "bright" fastener (i.e., it may lack plating/coating). However, the fastener typically includes a conventional plating and/or coating material to prevent corrosion and/or aid in installation. The dampening layer is generally disposed on or adjacent such plating and/or coating, which is typically already present on the fastener. Suitable fasteners are commercially available from a large number of suppliers.

As understood in the art, fasteners may be joined to an element, such as substrates or other complementary fasteners. In various embodiments, the threaded surface of the fastener and the element are joined together with the dampening layer disposed at least partially between the threaded surface and the element to form a joint. To this end, the element may include two different elements, substrates, or layers, with the fastener disposed adjacent and/or through the element. Typically, the element defines an aperture, and the fastener is disposed in the aperture defined by the substrate. The element may have a threaded surface complementary to the threaded surface of the fastener. Alternatively, the fastener may form the aperture in situ while being disposed in the substrate (e.g. in the case of self-tapping screws). In certain embodiments, the dampening layer is suited for use on bolt-and-nut assemblies or other threaded fasteners. In certain embodiments, the joint including the dampening layer disposed at least partially between the threaded surface of the fastener and the element exhibits an improved loosening-resistance as compared to a joint free of the dampening layer.

As introduced above, the dampening layer is adapted to provide the fastener with improved loosening-resistance as compared to a fastener free of the dampening layer. As also introduced above, the joint including the dampening layer disposed at least partially between the threaded surface and the element exhibits an improved loosening-resistance as compared to a joint free of the dampening layer. Loosening-resistance can be determined by subjecting the fastener including the dampening layer, and comparative fasteners, to accelerated vibrational cycling testing in accordance with DIN 25201-4. Similarly, loosening-resistance can be determined by subjecting the joint including the dampening layer, and comparative joints, to accelerated vibrational cycling testing in accordance with DIN 25201-4. The accelerated vibrational cycling testing utilizes a Junker Vibrational Test Machine. The fasteners subjected to the testing may be plain steel bolts. In summary, the fasteners are initially placed under a predetermined load, for example 30 kilonewtons (kN). The fasteners under load are then subjected to vibrational cycling for a predetermined amount of cycles, for example 1000 or 2000.

In certain embodiments, the fastener exhibits a load loss of less than 50%, optionally of less than 40%, or optionally of less than 30%, in accordance with DIN 25201-4 at pre-load of 30kN and for 1000 cycles. In various embodiments, the joint exhibits a load loss of less than 50%, optionally of less than 40%, or optionally of less than 30%, in accordance with DIN 25201-4 at pre-load of 30kN and for 1000 cycles.

In certain embodiments, the dampening layer is adapted to provide the joint improved loosening-resistance after unjoining and rejoining the threaded surface of the fastener and the element together as compared to a joint free of the dampening layer after unjoining and rejoining the threaded surface and the element together. For example, the joint may be unjoined and rejoined up to three times without disposing a new dampening layer on the fastener.

### Method of Forming the Composition

The composition can be formed by providing the first acrylic resin, providing the second acrylic resin, and combining the first acrylic resin and the second acrylic resin. The first acrylic resin and the second acrylic resin may be combined utilizing any mechanism or process known in the art for combining polymeric materials. Examples of suitable mechanisms and processes include, but are not limited to, mixing, extruding, blending, shaking, stirring, dispersing, and the like. The other components of the composition described above may be combined with the first acrylic resin and the second acrylic resin utilizing one or more of the aforementioned mechanisms and processes.

### Method of Forming the Composite Article

The composite article can be formed utilizing conventional techniques understood in the art. In an exemplary method of forming, the method includes the steps of providing the backing layer and providing the composition. The method further includes the step of applying the composition to at least a portion of the backing layer to form the composite article. In embodiments where the composition includes the solvent component, the method may further include the step of heating the composition after application to the backing layer to dry the composition to form the dampening layer. In various embodiments, the composition is disposed in a drying tunnel to form the dampening layer. In addition, the method may include the step of disposing one or more layers, such as the release layer, on the backing layer, on the dampening layer, or on both the backing layer and the dampening layer.

The composition may be applied to the backing layer by various methods understood in the art. For example, the composition can be sprayed, cast, dropped, sheeted, etc. onto the backing layer. After application, the composition article can be cut and rolled, with such techniques understood in the tape art, for example.

In various embodiments including the release layer, any typical coil/film applicator process may be utilized to apply the composition to the release layer. Non-limiting examples include a knife of edge process, a gravure process, a roll to roll process, etc. The method may further include rolling the composite article on a master roll. The method may further include forming one or more slits in the composite article to the desired sizes.

### Method of Disposing the Dampening Layer on the Fastener

Disposition of the dampening layer on the fastener can be accomplished utilizing conventional techniques understood in the art. In an exemplary method of disposition, the method includes the steps of providing the fastener including the threaded surface and providing the composite article. The method further includes the step of disposing the dampening layer on at least a portion of the threaded surface. As described above, the dampening layer is adapted to provide the fastener with improved loosening-resistance as compared to a fastener free of the dampening layer.

Cleaning of the fastener can be accomplished utilizing conventional techniques understood in the art. In an exemplary method, the method further includes the step of cleaning at least a portion of the threaded surface prior to disposing the dampening layer on at least a portion of the threaded surface. Cleaning solvents and solutions, such as methyl ethyl ketone, acetone, alkaline water (soap), or a variety of other cleaning solvents and solutions can be used to remove oil, grease, etc. from the fastener.

If desired, an underlying coating may be applied to a portion, a majority, or an entirety of the threaded surface of the fastener prior to disposing the dampening layer such that the dampening layer does not directly contact the threaded surface of the fastener. Typically, however, the dampening layer is applied directly to the threaded surface of the fastener. Such underlying coatings are typically distinguishable from conventional plating/coating materials present on fasteners.

In an exemplary embodiment, the fastener is first cleaned to remove dirt and oil. Next, the dampening layer is disposed on the fastener. The dampening layer may be tightly wrapped and stretched around the threaded surface of the fastener from about 1 to 2 revolutions, or optionally about 1.5 to about 2 revolutions, about the threaded surface. In various embodiments, the dampening layer may be applied to the fastener, then removed from the fastener, and then re-applied to the same or another fastener. The dampening layer may be removed from the fastener with conventional hand tools or by hand.

### Method of Joining the Fastener and the Element Together

After disposition of the dampening layer on the fastener, joining of the fastener and the element can be accomplished utilizing conventional techniques understood in the art. In an exemplary method of disposition, the method includes the step of providing the element. The method further includes the step of j oining the threaded surface of the fastener and the element together with the dampening layer disposed at least partially between the threaded surface and the element to form a joint. As described above, the joint exhibits an improved loosening-resistance as compared to a joint free of the dampening layer. Also described above, the dampening layer is adapted to provide the joint improved loosening-resistance after unjoining and rejoining the threaded surface of the fastener and the element together as compared to a joint free of the dampening layer after unjoining and rejoining the threaded surface and the element together.

In certain embodiments, the step of joining the threaded surface and the element together is performed within a time period of no greater than 20 minutes after the step of disposing the dampening layer on at least a portion of the threaded surface is performed. Alternatively, the step of j oining the threaded surface and the element together is performed within a time period of no greater than 5 minutes after the step of disposing the dampening layer on at least a portion of the threaded surface is performed. Alternatively, the step of j oining the threaded surface and the element together is performed within a time period of no greater than 1 minute after the step of disposing the dampening layer on at least a portion of the threaded surface is performed.

In certain embodiments, joining the threaded surface and the element together within a time period of no greater than 20 minutes after disposing the dampening layer on at least a portion of the threaded surface is achievable because the dampening layer is substantially free of the solvent. The phrase "substantially free" as utilized herein with reference to solvent means that the dampening layer includes less than 1 wt.%, less than 0.5 wt.%, or less 0.1 wt.% of the solvent.

Additional types of suitable fasteners, additives, secondary components (e.g. platings/coatings), methods of manufacture (e.g. coating techniques), and/or uses (e.g. element fastening), are described in United States (US) Patent Nos. 5,426,130; 5,651,824; 5,656,325; 5,672,376; 5,679,160; 5,928,711; 5,964,551; 6,027,568; 6,270,838; 6,322,628; 6,474,919; 6,817,816; 7,404,483; 7,521,402; 7,771,148; 7,772,316; 7,878,744; 8,865,794; and 8,865,812; US Publication Nos. 2008/292426; 2014/0199135; 2015/0014126 and 2015/0056394; and International Publication Nos. WO1999066219; WO2008073262; WO2008094535; WO2008094537; WO2008153866; and WO2008153868.

### INDUSTRIAL APPLICABILITY

While the present invention is not limited to a particular end application, use or industry, industrial and automotive equipment manufacturers often rely on fasteners to prevent critical parts from failing. The composite article provides a dampening layer having excellent physical properties for improving loosening resistance of fasteners and joints, including in the presence of vibration. As such, the composite article may also be referred to as "thread lock," "thread adhesive," "fastener adhesive," or "locking adhesive." The composite article may also be useful for providing a seal, via the dampening layer, against potential leakage of fluids and/or gasses. The composite article may be suitable for a variety of industrial applications, such as MRO, assembly lines, HVAC, heavy equipment, machine guarding, and NAT gas sealing, for a variety of consumer applications, such as lawn equipment, firearms/archery, threaded pipes, playgrounds, furniture/cabinetry, and household items.

The following examples, illustrating the compositions, fasteners, and methods of this disclosure, are intended to illustrate and not to limit the invention.

### EXAMPLES

The following examples are included to demonstrate various embodiments as contemplated herein. It should be appreciated by those of skill in the art that the techniques disclosed in the examples which follow represent techniques discovered by the inventor(s) to function well in the practice of the invention, and thus can be considered to constitute desirable modes for its practice. However, those of skill in the art should, in light of the present disclosure, appreciate that many changes can be made in the specific embodiments which are disclosed and still obtain a like or similar result without departing from the spirit and scope of the invention. All percentages are in wt.% and all measurements are conducted at 23°C unless indicated otherwise.

### Exemplary and Prophetic Formulations of the Composition

Provided below is an exemplary formulation (Ex. Form.) and various prophetic formulations (Pr. Form.) of the composition.

**Table I: Formulations**

| **Component** | **Ex. Form. I (wt.%)** | **Pr. Form. I (wt.%)** | **Pr. Form. II (wt.%)** | **Pr. Form. III (wt.%)** | **Pr. Form. IV (wt.%)** | **Pr. Form. V (wt.%)** |
|---|---|---|---|---|---|---|
| First Acrylic Resin | 37.6 | 30 | 30 | 38 | 45 | 45 |
| Second Acrylic Resin | 3.85 | 1 | 10 | 10 | 1 | 10 |
| Solvent I | 33.8 | 40.39 | 34.39 | 29.89 | 31.39 | 25.39 |
| Solvent II | 8.32 | 10 | 8.5 | 7.5 | 7.5 | 6.5 |
| Solvent III | 7.58 | 8 | 8 | 6.5 | 7 | 6 |
| Plasticizer | 8.24 | 10 | 8.5 | 7.5 | 7.5 | 6.5 |
| Additives | 0.61 | 0.61 | 0.61 | 0.61 | 0.61 | 0.61 |
| **TOTAL** | **100** | **100** | **100** | **100** | **100** | **100** |

First Acrylic Resin is a commercially available homopolymer of n-butyl methacrylate having a weight average molecular weight of 142,000 and a T_{g} of 20 °C in solid bead form.

Second Acrylic Resin is a commercially available copolymer of methyl methacrylate and butyl acrylate having a weight average molecular weight of 184,000 and a T_{g} of 50 °C in solid bead form.
Solvent I is methyl ethyl ketone which is commercially available.
Solvent II is toluene which is commercially available.
Solvent III is propylene glycol methyl ether which is commercially available.
Plasticizer is trioctyl trimellitate which is commercially available.
Additives include surfactant, colorant, and filler.

### Example I

Loosening-resistance of the exemplary fastener including the dampening layer of Ex. Form I (Exemplary Fastener), a comparative fastener free of the dampening layer, but including a conventional locking composition (Comparative Fastener I), and a comparative fastener free of the dampening layer and free of the conventional locking composition were evaluated (Comparative Fastener II).

The conventional locking composition is a liquid locking composition requiring application and drying prior to use of the fastener, commercially available from ND Industries of Clawson, Michigan under the trade name VC-3. The fasteners were M10-1.4 Grade 10.9 plain steel bolts.

After application of the dampening layer and the conventional locking composition, the fasteners were allowed to set for 24 hours. After setting for 24 hours, the fasteners were joined with M10 plain property class 10 steel nuts to form a joint. The conventional locking composition required setting prior to use of the fastener due to solvent being present after flash off of the composition. Even after 30 minutes of setting, solvent was still present resulting in softness and malleability. The conventional locking composition required 24 hours of setting for sufficient solvent to be released from the composition thereby resulting in optimal performance of the conventional locking composition.

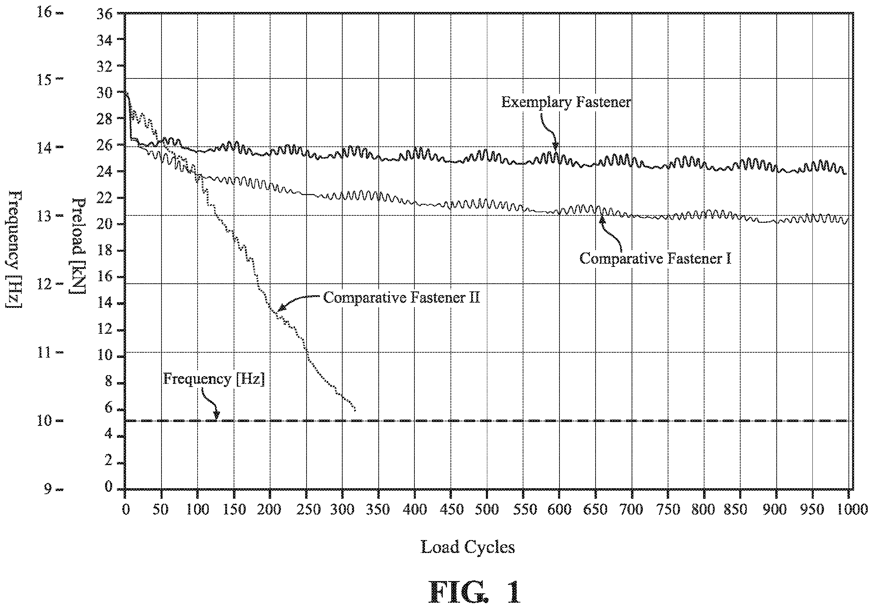

The loosening-resistance was evaluated utilizing accelerated vibrational cycling testing in accordance with DIN 25201-4. The accelerated vibrational cycling testing was performed on a Junker Vibrational Test Machine. The exemplary and comparative joints were placed under a pre-load of 30 kilonewtons (kN). The evaluation was performed at 10 hertz (Hz) for 1000 cycles. Results of the evaluation are illustrated in Figure 1 and shown in Table II below.

**Table II: Loosening-resistance results**

| **Cycle** | **0** | **100** | **200** | **300** | **400** | **500** | **600** | **700** | **800** | **900** | **1000** |
|---|---|---|---|---|---|---|---|---|---|---|---|
| Exemplary Fastener (kN) | 30 | 26 | 26 | 26 | 26 | 25 | 25 | 25 | 25 | 24 | 24 |
| Comparative Fastener I (kN) | 30 | 24 | 24 | 22 | 22 | 22 | 21 | 21 | 21 | 21 | 21 |
| Comparative Fastener II (kN) | 30 | 24 | 14 | 8 | 0 | 0 | 0 | 0 | 0 | 0 | 0 |

As illustrated in Figure 1 and shown in Table II, the Exemplary Fastener I including the dampening layer of Ex. Form I exhibited a load loss of about 20% as compared to a load loss of about 30% by the Comparative Fastener I including the conventional locking composition and a complete load loss by the Comparative Fastener II after 1000 cycles.

### Example II

Loosening-resistance of the exemplary fastener including the dampening layer of Ex. Form I (Exemplary Fastener) was further evaluated against various comparative fasteners, including a comparative fastener free of the dampening layer, but including the conventional locking composition (Comparative Fastener I) of Example I, a comparative fastener free of the dampening layer and free of the conventional locking composition (Comparative Fastener II) of Examples I, a comparative fastener including a conventional thread locker (Comparative Fastener III), a comparative fastener including a polytetrafluoroethylene (PTFE) tape (Comparative Fastener IV), and a comparative fastener including a split ring lock washer (Comparative Fastener V).

The fasteners were M10-1.4 Grade 10.9 oiled plain steel bolts.

After application of the dampening layer and the conventional locking composition, the fasteners were allowed to set for 24 hours. After setting for 24 hours, the fasteners were joined with M10 plain property class 10 steel nuts to form a joint. The conventional locking composition required setting prior to use of the fastener due to solvent being present after flash off of the composition. Even after 30 minutes of setting, solvent was still present resulting in softness and malleability. The conventional locking composition required 24 hours of setting for sufficient solvent to be released from the composition thereby resulting in optimal performance of the conventional locking composition.

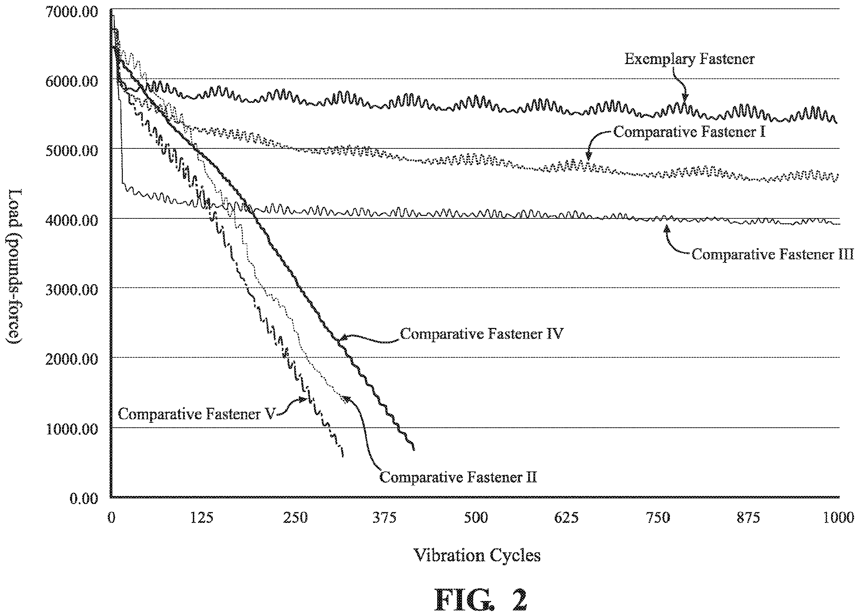

The loosening-resistance was evaluated utilizing accelerated vibrational cycling testing in accordance with DIN 25201-4. The accelerated vibrational cycling testing was performed on a Junker Vibrational Test Machine. The exemplary and comparative joints were placed under a pre-load of 30 kilonewtons (kN). The evaluation was performed at 10.0 hertz (Hz) for 1000 cycles. Results of the evaluation are illustrated in Figure 2 and shown in Table III below. The load amounts provided in Figure 2 are in pounds-force while the load amounts provided in Table III are in kN.

**Table III: Loosening-resistance results**

| **Cycle** | **0** | **125** | **250** | **375** | **500** | **625** | **750** | **875** | **1000** |
|---|---|---|---|---|---|---|---|---|---|
| Exemplary Fastener (kN) | 1.46 | 1.29 | 1.29 | 1.29 | 1.29 | 1.24 | 1.24 | 1.24 | 1.24 |
| Comparative Fastener I (kN) | 1.52 | 1.18 | 1.12 | 1.12 | 1.12 | 1.07 | 1.07 | 1.01 | 1.01 |
| Comparative Fastener II (kN) | 1.52 | 1.07 | 0.56 | 0 | 0 | 0 | 0 | 0 | 0 |
| Comparative Fastener III (kN) | 1.57 | 0.96 | 0.90 | 0.90 | 0.90 | 0.90 | 0.90 | 0.90 | 0.90 |
| Comparative Fastener IV (kN) | 1.52 | 1.12 | 0.73 | 0.28 | 0 | 0 | 0 | 0 | 0 |
| Comparative Fastener V (kN) | 1.52 | 1.01 | 0.45 | 0 | 0 | 0 | 0 | 0 | 0 |

As illustrated in Figure 2 and shown in Table III, the Exemplary Fastener I including the dampening layer of Ex. Form I exhibited a load loss of about 15% as compared to a load loss of about 30% by the Comparative Fastener I including the conventional locking composition, a load loss of about 40% by the Comparative Fastener III including the conventional thread locker, and a complete load loss by the Comparative Fasteners II, IV, V after 1000 cycles.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

The present invention has been described herein in an illustrative manner, and it is to be understood that the terminology which has been used is intended to be in the nature of words of description rather than of limitation. Many modifications and variations of the present invention are possible in light of the above teachings. The present invention may be practiced otherwise than as specifically described within the scope of the appended claims. The subject matter of all combinations of independent and dependent claims, both single and multiple dependent, is herein expressly contemplated.

## Claims

1. A composite article comprising:
a backing layer; and
a dampening layer disposed on the backing layer and prepared from a composition comprising;
A) a first acrylic resin present in an amount of from about 30 to about 50 parts by weight based on 100 parts by weight of the composition;
B) a second acrylic resin different from the first acrylic resin A) and present in an amount of about 1 to about 10 part(s) by weight based on 100 parts by weight of the composition;
C) a plasticizer component present in an amount of from about 1 to about 15 part(s) by weight based on 100 parts by weight of the composition;
D) a solvent component present in an amount of from about 40 to about 60 parts by weight based on 100 parts by weight of the composition;
E) a surfactant component present in an amount of from about 0.05 to about 1 part(s) by weight based on 100 parts by weight of the composition; and
G) a filler component present in an amount of from about 0.01 to about 1 part(s) by weight based on 100 parts by weight of the composition;
wherein the first acrylic resin A) comprises a polymer of n-butyl methacrylate and the second acrylic resin B) comprises a polymer of methyl methacrylate;
and wherein the composition optionally comprises F) a colorant component present in an amount of from about 0.05 to about 1 part(s) by weight based on 100 parts by weight of the composition.

2. The composite article of claim 1, wherein the first acrylic resin A) comprises a copolymer of methyl methacrylate and n-butyl methacrylate.

3. The composite article of claim 1 or 2, wherein the second acrylic resin B) comprises a copolymer of methyl methacrylate and butyl acrylate.

4. The composite article of any one of the preceding claims, consisting of the backing and dampening layers.

5. The composite article of any one of claims 1 to 4, wherein the plasticizer component C) comprises an ester plasticizer, optionally trioctyl trimellitate (TOTM).

6. The composite article of any one of claims 1 to 5, wherein the solvent component D) comprises an organic solvent, optionally methyl ethyl ketone (MEK), toluene, propylene glycol methyl ether, or combinations thereof.

7. The composite article of any one of claims 1 to 6, wherein the surfactant component E) comprises a nonionic surfactant, optionally an acetylene glycol surfactant, 2-ethylhexanol, or a combination thereof.

8. The composite article of any one of claims 1 to 7, wherein the composition comprises the colorant component F) and wherein the colorant component F) comprises a pigment, a dye, or a combination thereof.

9. The composite article of any one of claims 1 to 8, wherein the filler component G) comprises an inorganic filler, optionally fumed silica.

10. A method of forming the composite article as set forth in any one of claims 1 to 9, said method comprising the steps of:
providing the backing layer;
providing the composition; and
applying the composition to at least a portion of the backing layer to form the composite article.

11. A method of disposing a dampening layer on a fastener, said method comprising the steps of:
providing the fastener comprising a threaded surface;
providing a composite article, wherein the composite article is as set forth in any one of claims 1 to 9; and
disposing the dampening layer on at least a portion of the threaded surface;
wherein the dampening layer is adapted to provide the fastener with improved loosening-resistance as compared to a fastener free of the dampening layer.

12. A method of joining a fastener and an element together, said method comprising the steps of:
providing the fastener comprising a threaded surface;
providing the element;
providing a composite article, wherein the composite article is as set forth in any one of claims 1 to 9;
disposing the dampening layer on at least a portion of the threaded surface; and
joining the threaded surface and the element together with the dampening layer disposed at least partially between the threaded surface and the element to form a joint;
wherein the joint exhibits an improved loosening-resistance as compared to a joint free of the dampening layer.

13. The method of claim 12, wherein the step of joining the threaded surface and the element together is performed within a time period of no greater than five minutes after the step of disposing the dampening layer on at least a portion of the threaded surface is performed.

14. The method of claim 12 or 13, wherein the dampening layer is adapted to provide the joint with improved loosening-resistance after unjoining and rejoining the threaded surface and the element together as compared to a joint free of the dampening layer after unjoining and rejoining the threaded surface and the element together.

15. Use of the composite article as set forth in any one of claims 1 to 9 to secure and/or to prevent loosening of a fastener.

## Patentansprüche

1. Verbundartikel, umfassend:
eine Trägerschicht; und
eine Dämpfungsschicht, die auf der Trägerschicht angeordnet und aus einer Zusammensetzung hergestellt ist, die Folgendes umfasst;
A) ein erstes Acrylharz, das in einer Menge von etwa 30 bis etwa 50 Gewichtsteilen vorliegt, bezogen auf 100 Gewichtsteile der Zusammensetzung;
B) ein zweites Acrylharz, das von dem ersten Acrylharz A) verschieden ist und in einer Menge von etwa 1 bis etwa 10 Gewichtsteilen vorliegt, bezogen auf 100 Gewichtsteile der Zusammensetzung;
C) eine Weichmacherkomponente, die in einer Menge von etwa 1 bis etwa 15 Gewichtsteilen vorliegt, bezogen auf 100 Gewichtsteile der Zusammensetzung;
D) eine Lösungsmittelkomponente, die in einer Menge von etwa 40 bis etwa 60 Gewichtsteilen vorliegt, bezogen auf 100 Gewichtsteile der Zusammensetzung;
E) eine Tensidkomponente, die in einer Menge von etwa 0,05 bis etwa 1 Gewichtsteil(en) vorliegt, bezogen auf 100 Gewichtsteile der Zusammensetzung; und
G) eine Füllstoffkomponente, die in einer Menge von etwa 0,01 bis etwa 1 Gewichtsteil(en) vorliegt, bezogen auf 100 Gewichtsteile der Zusammensetzung;
wobei das erste Acrylharz A) ein Polymer von n-Butylmethacrylat und das zweite Acrylharz B) ein Polymer von Methylmethacrylat umfasst;
und wobei die Zusammensetzung gegebenenfalls F) eine färbende Komponente in einer Menge von etwa 0,05 bis etwa 1 Gewichtsteil(en) umfasst, bezogen auf 100 Gewichtsteile der Zusammensetzung.

2. Verbundartikel nach Anspruch 1, wobei das erste Acrylharz A) ein Copolymer aus Methylmethacrylat und n-Butylmethacrylat umfasst.

3. Verbundartikel nach Anspruch 1 oder 2, wobei das zweite Acrylharz B) ein Copolymer aus Methylmethacrylat und Butylacrylat umfasst.

4. Verbundartikel nach einem der vorhergehenden Ansprüche, bestehend aus der Trägerschicht und der Dämpfungsschicht.

5. Verbundartikel nach einem der Ansprüche 1 bis 4, wobei die Weichmacherkomponente C) einen Esterweichmacher, gegebenenfalls Trioctyltrimellitat (TOTM), umfasst.

6. Verbundgegenstand nach einem der Ansprüche 1 bis 5, wobei die Lösungsmittel-komponente D) ein organisches Lösungsmittel, gegebenenfalls Methylethylketon (MEK), Toluol, Propylenglykolmethylether oder Kombinationen davon, umfasst.

7. Verbundartikel nach einem der Ansprüche 1 bis 6, wobei die Tensidkomponente E) ein nichtionisches Tensid, gegebenenfalls ein Acetylenglykol-Tensid, 2-Ethylhexanol oder eine Kombination davon umfasst.

8. Verbundartikel nach einem der Ansprüche 1 bis 7, wobei die Zusammensetzung die färbende Komponente F) umfasst und wobei die färbende Komponente F) ein Pigment, einen Farbstoff oder eine Kombination davon umfasst.

9. Verbundartikel nach einem der Ansprüche 1 bis 8, wobei die Füllstoffkomponente G) einen anorganischen Füllstoff, gegebenenfalls pyrogene Kieselsäure, umfasst.

10. Verfahren zur Herstellung des Verbundartikels nach einem der Ansprüche 1 bis 9, wobei das Verfahren die folgenden Schritte umfasst:
Bereitstellung der Trägerschicht;
Bereitstellung der Zusammensetzung; und
Auftragen der Zusammensetzung auf mindestens einen Teil der Trägerschicht,
um den Verbundartikel zu bilden.

11. Verfahren zum Anbringen einer Dämpfungsschicht auf einem Befestigungselement, wobei das Verfahren die folgenden Schritte umfasst
Bereitstellung des Befestigungselements mit einer Gewindefläche;
Bereitstellen eines Verbundartikels, wobei der Verbundartikel wie in einem der Ansprüche 1 bis 9 beschrieben ist; und
Anbringen der Dämpfungsschicht auf mindestens einem Teil der Gewindefläche;
wobei die Dämpfungsschicht so beschaffen ist, dass sie dem Befestigungselement im Vergleich zu einem Befestigungselement ohne Dämpfungsschicht einen verbesserten Lockerungswiderstand verleiht.

12. Verfahren zum Verbinden eines Befestigungselements und eines Elements, wobei das Verfahren die folgenden Schritte umfasst
Bereitstellung des Befestigungselements mit einer Gewindefläche; Bereitstellung des Elements;
Bereitstellen eines Verbundartikels, wobei der Verbundartikel wie in einem der Ansprüche 1 bis 9 beschrieben ist;
Anbringen der Dämpfungsschicht auf mindestens einem Teil der Gewindefläche; und
Verbinden der Gewindefläche und des Elements zusammen mit der Dämpfungs-schicht, die zumindest teilweise zwischen der Gewindefläche und dem Element angeordnet ist, um eine Verbindung zu bilden;
wobei die Verbindung im Vergleich zu einer Verbindung ohne Dämpfungsschicht einen verbesserten Lockerungswiderstand aufweist.

13. Verfahren nach Anspruch 12, wobei der Schritt des Verbindens der Gewindefläche und des Elements innerhalb einer Zeitspanne von nicht mehr als fünf Minuten nach dem Schritt des Anbringens der Dämpfungsschicht auf mindestens einem Teil der Gewindefläche durchgeführt wird.

14. Verfahren nach Anspruch 12 oder 13, wobei die Dämpfungsschicht so beschaffen ist, dass sie der Verbindung nach dem Lösen und Wiederzusammenfügen der Gewindefläche und des Elements im Vergleich zu einer Verbindung ohne Dämpfungsschicht nach dem Lösen und Wiederzusammenfügen der Gewindefläche und des Elements einen verbesserten Lockerungswiderstand verleiht.

15. Verwendung des Verbundartikels nach einem der Ansprüche 1 bis 9 zur Sicherung und/oder zur Verhinderung des Lösens eines Befestigungsmittels.

## Revendications

1. Un article composite comprenant :
une couche de support ; et
une couche d'amortissement disposée sur la couche de support et préparée à partir d'une composition comprenant ;
A) une première résine acrylique présente en une quantité allant d'environ 30 à environ 50 parties en poids pour 100 parties en poids de la composition ;
B) une deuxième résine acrylique différente de la première résine acrylique A) et présente en une quantité allant d'environ 1 à environ 10 partie(s) en poids sur la base de 100 parties en poids de la composition ;
C) un composant plastifiant présent en une quantité allant d'environ 1 à environ 15 partie(s) en poids pour 100 parties en poids de la composition ;
D) un composant solvant présent en une quantité allant d'environ 40 à environ 60 parties en poids pour 100 parties en poids de la composition ;
E) un composant tensioactif présent en une quantité allant d'environ 0,05 à environ 1 partie(s) en poids pour 100 parties en poids de la composition ; et
G) un composant de charge présent en une quantité allant d'environ 0,01 à environ 1 partie(s) en poids sur la base de 100 parties en poids de la composition ;
la première résine acrylique A) comprenant un polymère de méthacrylate de n-butyle et la deuxième résine acrylique B) comprend un polymère de méthacrylate de méthyle ; et
la composition comprenant optionnellement F) un composant colorant présent en une quantité allant d'environ 0,05 à environ 1 partie(s) en poids sur la base de 100 parties en poids de la composition.

2. L'article composite selon la revendication 1, dans lequel la première résine acrylique A) comprend un copolymère de méthacrylate de méthyle et de méthacrylate de n-butyle.

3. L'article composite selon la revendication 1 ou la revendication 2, dans lequel la deuxième résine acrylique B) comprend un copolymère de méthacrylate de méthyle et d'acrylate de butyle.

4. L'article composite selon l'une quelconque des revendications précédentes, constitué des couches de support et d'amortissement.

5. L'article composite selon l'une quelconque des revendications 1 à 4, dans lequel le composant plastifiant C) comprend un plastifiant ester, optionnellement du trimellitate de trioctyle (TOTM).

6. L'article composite selon l'une quelconque des revendications 1 à 5, dans lequel le composant solvant D) comprend un solvant organique, optionnellement de la méthyléthylcétone (MEK), du toluène, de l'éther méthylique de propylèneglycol ou des combinaisons de ceux-ci.

7. L'article composite selon l'une quelconque des revendications 1 à 6, dans lequel le composant tensioactif E) comprend un tensioactif non ionique, optionnellement un tensioactif acétylène glycol, du 2-éthylhexanol, ou une combinaison de ceux-ci.

8. L'article composite selon l'une quelconque des revendications 1 à 7, dans lequel la composition comprend le composant colorant F) et dans lequel le composant colorant F) comprend un pigment, un colorant ou une combinaison de ceux-ci.

9. L'article composite selon l'une quelconque des revendications 1 à 8, dans lequel le composant de charge G) comprend une charge inorganique, optionnellement de la silice fumée.

10. Un procédé de formation de l'article composite selon l'une quelconque des revendications 1 à 9, ledit procédé comprenant les étapes suivantes :
le fait de fournir la couche de support ;
le fait de fournir la composition ; et
le fait d'appliquer la composition sur au moins une partie de la couche de support de façon à former l'article composite.

11. Un procédé de disposition d'une couche amortissante sur un organe de fixation, ledit procédé comprenant les étapes consistant à :
prévoir l'organe de fixation de telle sorte qu'il comprenne une surface filetée ;
fournir un article composite, l'article composite étant tel qu'exposé dans l'une quelconque des revendications 1 à 9 ; et
disposer la couche d'amortissement sur au moins une partie de la surface filetée ;
la couche d'amortissement étant adaptée pour conférer à l'organe de fixation une résistance au desserrage améliorée par rapport à un organe de fixation dépourvu de couche d'amortissement.

12. Un procédé d'assemblage d'un organe de fixation et d'un élément entre eux, ledit procédé comprenant les étapes consistant à :
prévoir l'organe de fixation de telle sorte qu'il comprenne une surface filetée ;
fournir l'élément ;
fournir un article composite, l'article composite étant tel qu'exposé dans l'une quelconque des revendications 1 à 9 ;
disposer la couche d'amortissement sur au moins une partie de la surface filetée ; et
joindre la surface filetée et l'élément avec la couche d'amortissement disposée au moins partiellement entre la surface filetée et l'élément pour former un joint ;
le joint présentant une résistance au desserrage améliorée par rapport à un joint exempt de couche d'amortissement.

13. Le procédé selon la revendication 12, dans lequel l'étape de jonction l'un à l'autre de la surface filetée et de l'élément est mise en oeuvre dans un laps de temps ne dépassant pas cinq minutes après que l'étape de disposition de la couche d'amortissement sur au moins une partie de la surface filetée soit effectué.

14. Le procédé selon la revendication 12 ou la revendication 13, dans lequel la couche d'amortissement est adaptée pour conférer à la jonction une résistance au desserrage améliorée après séparation de la surface filetée et de l'élément l'un par rapport à l'autre et remise en place de ceux-ci par rapport à une jonction exempt de couche d'amortissement après séparation et remise en place de la surface filetée et de l'élément l'un par rapport à l'autre.

15. Utilisation de l'article composite selon l'une quelconque des revendications 1 à 9 pour fixer et/ou empêcher le desserrage d'un organe de fixation.
